Europäisches Patentamt

European Patent Office

Office européen des brevets

(11) Veröffentlichungsnummer: **0 033 824**
**B1**

(12) EUROPÄISCHE PATENTSCHRIFT

(45) Veröffentlichungstag der Patentschrift: 03.04.85

(51) Int. Cl.⁴: **B 65 D 65/00**

(21) Anmeldenummer: 80890148.2

(22) Anmeldetag: 12.12.80

(54) **Heissiegelfähiges Verpackungsmaterial, sowie dessen Verwendung.**

(30) Priorität: 12.12.79 AT 7827/79

(43) Veröffentlichungstag der Anmeldung:
19.08.81 Patentblatt 81/33

(45) Bekanntmachung des Hinweises auf die
Patenterteilung:
03.04.85 Patentblatt 85/14

(84) Benannte Vertragsstaaten:
AT CH DE FR GB LI SE

(56) Entgegenhaltungen:
DE-A-2 254 473
DE-A-2 434 020
DE-B-2 703 531

(73) Patentinhaber: FOLIENWALZWERK BRUEDER
TEICH AKTIENGESELLSCHAFT
A-3200 Obergrafendorf-Mühlhofen (AT)

(72) Erfinder: Reiterer, Franz
Brunnengasse 24
A-3200 Obergrafendorf (AT)

(74) Vertreter: Stampfer, Heinz
ISOVOLTA Österreichische Isolierstoffwerke AG
Industriezentrum-Süd
A-2351 Wiener Neudorf (AT)

EP 0 033 824 B1

Courier Press, Leamington Spa, England.

## Beschreibung

Die Erfindung betrifft ein heißsiegelfähiges flächiges Verpackungsmaterial mit einer heißsiegelfähigen Schicht, das dazu bestimmt ist, an einem vorgegebenen Flächenbereich mit einem Körper, der zumindest in einer oberflächigen Schicht aus einem heißsiegelfähigen Material besteht, eine Heißsiegelverbindung einzugehen, sowie eine vorteilhafte Verwendung des erfindungsgemäßen Verpackungsmaterials.

Für bestimmte Verpackungszwecke ist es seit längerem üblich, Packungen vorzusehen, die nach dem Einbringen des Füllguts durch eine Heißsiegelungsnaht gasdicht verschlossen werden; der Verschlußteil solcher Packungen wird dabei oft von einem flächigen Verpackungsmaterial gebildet, das an der Packungsinnenseite eine aus einem Siegelmedium bestehende Oberflächenschicht aufweist, welche mit dem Füllgut in Verbindung steht. Verpackungen dieser Art werden insbesondere zum Verpacken von Lebens- und Genußmitteln verwendet. Ein bekanntes Beispiel hierfür sind Joghurt-Behälter, bei denen ein Becher aus Polypropylen, der an seiner Öffnung einen krempenförmig vorspringenden Rand aufweist, mit einer Platine aus so einem flächigen Verpackungsmaterial verschlossen ist, wobei der Platinenrand mit dem krempenförmig vorspringenden Rand der Becheröffnung durch eine Heißsiegelnaht gasdicht verbunden ist.

Für solche Verpackungen besteht nun die Forderung, daß das Siegelmedium mit dem Füllgut verträglich sein muß, d.h. insbesondere daß keine durch die chemische Zusammensetzung des Siegelmediums bewirkte Veränderung des Füllgutes und keinerlei Migration von Geruchs- bzw. Geschmacksstoffen aus dem Siegelmedium in das Füllgut bzw. in die mit dem Füllgut in der Verpackung eingeschlossene Atmosphäre stattfinden darf. Durch diese Forderung wird die Auswahl unter den vom technischen Standpunkt brauchbaren Siegelmedien eingeschränkt; Siegelmedien, die vom technischen und/oder wirtschaftlichen Standpunkt optimal wären, werden mitunter dieser Forderung nicht völlig genügen.

Hier will die Erfindung Abhilfe schaffen. Der Erfindung liegt die Aufgabe zugrunde, ein heißsiegelfähiges Verpackungsmaterial der eingangs genannten Art sowie eine vorteilhafte Verwendung dieses Verpackungsmaterials anzugeben, bei denen der genannten Forderung entsprochen wird, dabei für die Auswahl des Siegelmediums jedoch eine relativ große Freiheit erhalten bleibt.

Die der Erfindung zugrundeliegende Aufgabe wird in dem erfindungsgemäßen Verpackungsmaterial gelöst, welches besteht aus

1. einem flächigen Trägermaterial,

2. einer an einer Seite des Trägermaterials in Form einer Beschichtung aufgebrachten Siegelmedium-Schicht, die keine wesentliche mechanisch tragende Funktion aufweist, und aus

3. einer diese Siegelmedium-Schicht abdeckende Abdeckschicht aus einem zumindest nahezu porenfreien thermoplastischen Material, dessen Schmelzpunkt niedriger ist als die untere Grenze des Schmelzbereiches des Materials der Siegelmedium-Schicht.

Aus der DE—A—24 34 020 ist nun zwar ein heißsiegelfähiges Verpackungsmaterial bekannt, das an seiner Siegelungsseite eine oberflächige Schicht aus einem heißsiegelfähigem Material aufweist, unter dieser eine Kunststoffschicht angeordnet ist, die auch aus einem thermoplastischen, d.h. einem gegebenenfalls an sich heißsiegelfähigem Material bestehen kann; diese Kunststoffschicht bildet hier jedoch im Gegensatz zur Erfindung die Trägerfolie des Verpackungsmaterials und wird nicht als Siegelmedium verwendet.

Die Erfindung betrifft ferner vorteilhafte Ausgestaltungen des erfindungsgemäßen Verpackungsmaterials, wie sie in den Ansprüchen 2 bis 6 definiert sind.

Die erfindungsgemäße Verwendung des Verpackungsmaterials ist dadurch gekennzeichnet, daß das Verpackungsmaterial in Form von Verschlußplatinen für Behälter verwendet wird, bei denen die Platine am Behälterrand angesiegelt wird, wobei die Siegelung bei einem Aufpreßdruck, einer Temperatur und Einwirkdauer des Siegelungswerkzeuges erfolgt, daß die Abdeckschicht an der Stelle der Siegelungsverbindung flüssig und durch die Wirkung des Anpreßdruckes zumindest zum größten Teil seitlich weggequetscht wird, sodaß die Siegelungsverbindung zwischen dem Behälterrand und der Siegelmedium-Schicht hergestellt wird.

Diese gemäß der erfindungsgemäßen Verwendung realisierte Siegelungsverbindung unterscheidet sich grundsätzlich von den üblichen, z.B. auch aus der genannten DE—A—24 34 020 bekannten Siegelungsverbindungen, welche regelmäßig jeweils zwischen den an die Oberflächen der zu verbindenden Teile reichenden bzw. an diesen Oberflächen angeordneten Schichten aus siegelfähigem Material hergestellt werden.

Die Erfindung wird nachstehend anhand der Figuren an zwei Beispielen näher erläutert.

Die Fuguren 1 und 2 zeigen jeweils in einer Teildarstellung im Schnitt einen Joghurt-Becher vor bzw. während des Aufsiegelns einer aus dem erfindungsgemäßen Verpackungsmaterial hergestellten Verschlußplatine gemäß einererersten Verwendungsvariante.

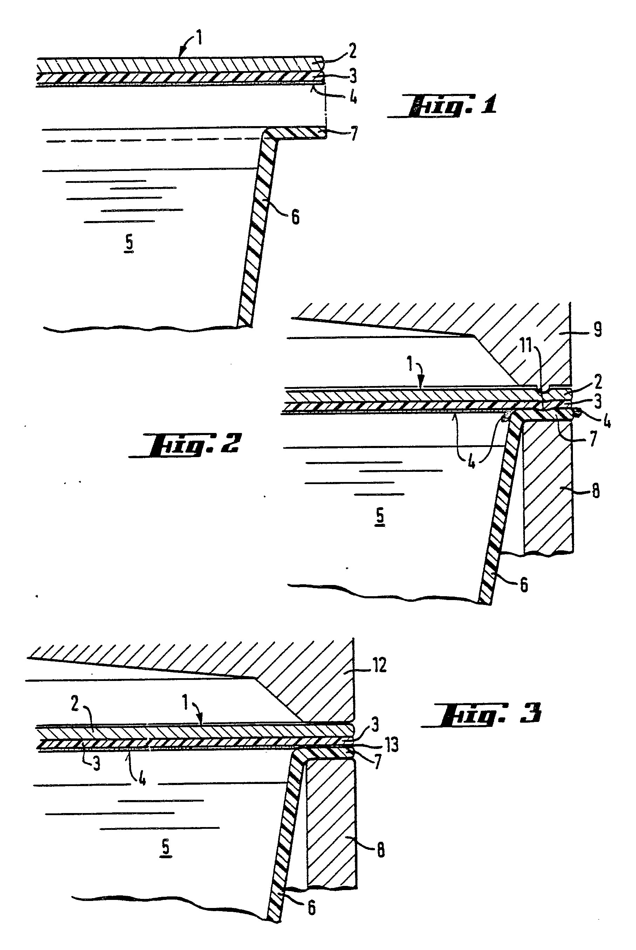

Das Material der Verschlußplatine 1 (siehe Fig. 1) besteht im wesentlichen aus einem Aluminiumband als Trägermaterial 2 mit einem Reinheitsgrad von 99,0, auf das packungsinnenseitig eine Schicht 3 eines Siegelmediums, welches gegen Polypropylen heißsiegelfähig ist, in Form eines lösungsmittelhältigen Einbrennlackes in einer Dicke von 0,005 mm aufgebracht wird. Siegelmedien mit diesen Eigenschaften sind auf dem Markt erhältlich; sie sind nicht Gegenstand der Erfindung. In einem zweiten Arbeitsgang wird dann auf diese Siegelmediumschicht 3 ein thermoplastisches Paraffinwachs im schmelzflüssigen Zustand mittels einer Walze zur Bildung einer etwa 0,005 mm dicken Abdeckschicht 4 aufgetragen.

Fig. 1 zeigt eine Randzone eines mit dem Füllgut 5, z.B. mit Joghurt gefüllten Bechers 6 aus Polypropylen, dessen oberer Rand 7 krempenförmig ausläuft. Für das Verschließen wird auf dem mit seinem Rand 7 auf einem Haltering 8 aufsitzenden gefüllten Becher 6 nun entsprechend Fig. 2 die Verschlußplatine 1 aufgesetzt und das Siegelungswerkzeug 9 mit seinem rippenartigen Vorsprung 10 kurzzeitig auf den Rand der Verschlußplatine 1 aufgepreßt. Anpreßdruck, Temperatur und Einwirkdauer des Siegelungswerkzeuges 9 sind genügend hoch gewählt, daß an der Stelle der angestrebten Siegelungsverbindung 11 das Paraffinwachs der Abdeckschicht 4 über seinen Schmelzpunkt aufgeheizt und dabei unter der Wirkung des Anpreßdruckes seitlich weggequetscht wird, wobei es wegen des Weichwerdens des Siegelmediums zum Teil auch in dieses eindiffundiert. Die Siegelmedium-Schicht 3 kommt dann schließlich in Kontakt mit dem Rand des Bechers 6 und geht mit diesem eine Siegelungsverbindung 11 ein. In vorliegendem Beispiel beträgt die Temperatur des Siegelungswerkzeuges mehr als 200°C, z.B. 230°C, der Schmelzbereich des Siegelmediums zwischen 180 und 200°C und der Schmelzpunkt des Paraffinwachses etwa 75°C.

Wie nun aus Fig. 2 ersichtlich, wird die Siegelmediumschicht 3 gegen das Füllgut immer von der Paraffinwachsschicht 4 abgedeckt. Eine ungewünschte Migration von Duft- oder Geschmacksstoffen aus der Siegelmediumschicht 3 in das Füllgut 5 wird durch die von dem porenfreien Paraffinwachs gebildeten Barriere verhindert.

Das Vorsehen dieser Paraffinwachsschicht 4 bringt aber noch einen weiteren Vorteil. Platinenverschlüsse an Becher-Packungen, von der Art wie in dem vorstehenden Beispiel beschrieben, werden nämlich gewöhnlich durch Abziehen der Platine vom Becherrand geöffnet. Diese setzt voraus, daß die Schälfestigkeit der durch die Siegelungsnaht hergestellten Verbindung einen bestimmten vorgegebenen Wert nicht überschreitet. Durch Eindiffundieren des Paraffinwachses in das Siegelmedium werden dessen Siegelungseigenschaften im Sinne einer geringfügigen Verringerung der erreichbaren Schälfestigkeit verändert. Dabei sinkt die erreichbare Schälfestigkeit mit steigender Menge an eindiffundierten Paraffinwachs. Da nun aber umso mehr Paraffinwachs eindiffundiert umso dicker die Paraffinwachsschicht ist, so besteht die Möglichkeit, durch Variation der Dicke der Paraffinwachsschicht 4 die Schälfestigkeit der Siegelungsverbindung in vorteilhafter Weise auf etwa den gewünschten Wert einzustellen.

Statt des Paraffinwachses kann als thermoplastisches Material der Abdeckschicht 4 auch vorteilhat ein bekannter Heißschmelzkleber (Hotmelt) z.B. einer auf Basis von Äthylenvinylacetat mit einem Schmelzpunkt von etwa 80°C verwendet werden. Ein solches Verpackungsmaterial wird nun ebenfalls gemäß der ersten, anhand der Figuren 1 und 2 beschriebenen Variante vorteilhaft als Verschlußplatine verwendet.

Anhand von Fig. 3 wird nun nachstehend eine zweite Verwendungsvariante beschrieben, bei der die nun z.B. aus einem Heißschmelzkleber (Hotmelt) auf Basis von Äthylenvinylacetat bestehende Abdeckschicht 4 selbst als Siegelmediumschicht dient und daher auch bei niedrigeren Temperaturen gegen Kunststoffe gesiegelt werden kann, die gegen die eigentliche Siegelungsschicht nicht siegeln würden.

Fig. 3 zeigt analog wie Fig. 2 einen Joghurt-Becher 6 aus PVC während des Aufsiegelns der Verschlußplatine 1. Das verwendete Siegelungswerkzeug 12, das an seiner wirksamen Oberfläche nun stumpf ausgebildet ist und im Gegensatz zur Variante nach Fig. 2 keine wesentliche Komprimierung des Verschlußplatinenrandes bewirkt, hat eine Temperatur von etwa 150°C. Diese reicht bei einer genügend kurzen Einwirkdauer nicht aus, um die Abdeckschicht 4 im Bereich der angestrebten Siegelungsverbindung zum Schmelzen zu bringen; die Siegelungsverbindung 12 entsteht nun vielmehr zwischen dem Becherrand 7 und der Abdeckschicht 4.

## Patentansprüche

1. Heißsiegelfähiges flächiges Verpackungsmaterial (1) das dazu bestimmt ist, an einem vorgegebenen Flächenbereich mit einem Körper, der zumindest in einer oberflächigen Schicht aus einem heißsiegelfähigem Material besteht, eine Heißsiegelverbindung einzugehen, bestehend aus

    1. einem flächigen Trägermaterial (2),

    2. einer an einer Seite des Trägermaterials (2) in Form einer Beschichtung aufgebrachten Siegelmedium-Schicht (3), die keine wesentliche mechanisch tragende Funktion aufweist, und aus

    3. eine diese Siegelmedium-Schicht (3) abdeckende Abdeckschicht (4) aus einem zumindest nahezu porenfreien thermoplastischem Material, dessen Schmelzpunkt niedriger ist als die untere Grenze des schmelzbereiches des Materials der Siegelmedium-Schicht (3).

2. Verpackungsmaterial nach Anspruch 1, dadurch gekennzeichnet, daß der Schmelzpunkt des Materials der Abdeckschicht (4) um mindestens 50°C niedriger ist als die untere Grenze des Schmelzbereiches des Materials der Siegelmedium-Schicht (3).

3. Verpackungsmaterial nach Anspruch 1 oder 2, dadurch gekennzeichnet, daß das Material der Abdeckschicht (4) ein Heißschmelzwachs ist.

4. Verpackungsmaterial nach Anspruch 1 oder 2, dadurch gekennzeichnet, daß das Material der Abdeckschicht (4) ein Heißschmelzkleber ist.

5. Verpackungsmaterial nach einem der Ansprüche 1 bis 4, dadurch gekennzeichnet, daß die Dicke der Abdeckschicht (4) 0,004 bis 0,040 mm beträgt.

6. Verpackungsmaterial nach Anspruch 5, dadurch gekennzeichnet, daß die Dicke der Abdeckschicht (4) 0,004 bis 0,015 mm beträgt.

7. Verwendung des Verpackungsmaterials gemäß einem der Ansprüche 1 bis 6, dadurch gekennzeichnet, daß das Verpackungsmaterial in Form von Verschlußplatinen (1) für Behälter (6) verwendet wird, bei denen die Platine am Behälterrand (7) angesiegelt wird, wobei die Siegelung bei einem Aufpreßdruck, einer Temperatur und Einwirkdauer des Siegelungswerkzeuges (9) erfolgt, die ausreichen, daß die Abdeckschicht (4) an der Stelle der Siegelungsverbindung (11) flüssig und durch die Wirkung des Anpreßdruckes zumindest zum größten Teil seitlich weggequetscht wird, sodaß die Siegelungsverbindung (11) zwischen dem Behälterrand (7) und der Siegelmedium-Schicht (3) hergestellt wird.

## Revendications

1. Matière d'emballage plane (1) susceptible d'être scellé à chaud qui est conçue pour former un joint scellé à chaud sur une zone superficielle prédéterminée avec un corps qui est constitué, au moins dans une couche superficielle, d'une matière susceptible d'être scellé à chaud, se composant:

1. d'une matière portante plane (2),
2. d'une couche d'agent de scellement (3) déposée sous forme d'un revêtement sur un côté de la matière portante (2) et qui ne remplit aucune fonction essentielle de support mécanique,
3. d'une couche de recouvrement (4) recouvrant cette couche d'agent de scellement (3) et constituée d'une matière thermoplastique au moins pratiquement exempte de pores et dont le point de fusion est plus bas que la limite inférieure de la plage de fusion de la matière de la couche d'agent de scellement (3).

2. Matière d'emballage selon la revendication 1, caractérisée en ce que le point de fusion de la matière de la couche de recouvrement (4) est inférieur d'au moins 50°C à la limite inférieure de la plage de fusion de la matière de la couche d'agent de scellement (3).

3. Matière d'emballage selon la revendication 1 ou 2, caractérisée en ce que la matière de la couche de recouvrement (4) est une cire fusible à chaud.

4. Matière d'emballage selon la revendication 1 ou 2, caractérisée en ce que la matière de la couche de recouvrement (4) est un adhésif fusible à chaud.

5. Matière d'emballage selon une des revendications 1 à 4, caractérisée en ce que l'épaisseur de la couche de recouvrement (4) est comprise entre 0,004 et 0,040 mm.

6. Matière d'emballage selon la revendication 5, caractérisée en ce que l'épaisseur de la couche de recouvrement (4) est comprise entre 0,004 et 0,015 mm.

7. Utilisation de la matière d'emballage selon une des revendications 1 à 6, caractérisée en ce que la matière d'emballage est utilisée sous la forme de plaques de fermeture (1) pour des récipients (6) dans lesquels la plaque est scellée sur le bord (7) du récipient, le scellement étant effectué à une pression de serrage, à une température et pendant une durée d'application de l'outil de scellement (9) qui sont suffisantes pour que la couche de recouvrement (4) soit liquéfiée dans la zone du joint de scellement (11) et soit au moins en majeure partie refoulée latéralement sous l'action de la pression de serrage de façon à réaliser la liaison de scellement (11) entre le bord (7) du récipient et la couche d'agent de scellement (3).

## Claims

1. Heat-sealable sheet-like packaging material (1) intended to form a heat-seal bond, in a predetermined surface zone, with a body which at least in a surface layer consists of a heat-sealable material, which packaging material comprises

1. a sheet-like base material (2),
2. a sealing medium layer (3), applied in the form of a coating to one side of the base material (2), which layer has no significant mechanical load-bearing function, and
3. a covering layer (4), which covers the said sealing medium layer (3) and consists of an at least almost non-porous thermoplastic material, the melting point of which is lower than the lower limit of the melting range of the material of the sealing medium layer (3).

2. Packaging material according to Claim 1, characterised in that the melting point of the material of the covering layer (4) is at least 50°C lower than the lower limit of the melting range of the material of the sealing medium layer (3).

3. Packaging material according to Claim 1 or 2, characterised in that the material of the covering layer (4) is a hot-melt wax.

4. Packaging material according to Claim 1 or 2, characterised in that the material of the covering layer (4) is a hot-melt adhesive.

5. Packaging material according to one of Claims 1 to 4, characterised in that the thickness of the covering layer (4) is 0.004 to 0.040 mm.

6. Packaging material according to Claim 5, characterised in that the thickness of the covering layer (4) is 0.004 to 0.015 mm.

7. Use of the packaging material according to one of Claims 1 to 6, characterised in that the packaging material is used in the form of a sealing blank (1) for a container (6) in which the blank is sealed onto the container rim (7), the sealing being effected at a contact pressure, temperature and duration of action of the sealing tool (9) which suffice to liquefy the covering layer (4) at the location of the sealing bond (11) and squeeze it out laterally, at least to a predominant degree, under the action of the contact pressure, so that the sealing bond (11) is produced between the container rim (7) and the sealing medium layer (3).

**Fig: 1**

**Fig: 2**

**Fig: 3**